Europäisches Patentamt

European Patent Office

Office européen des brevets

(19)

(11) **EP 0 775 664 A2**

(12) **EUROPEAN PATENT APPLICATION**

(43) Date of publication:
28.05.1997 Bulletin 1997/22

(51) Int. Cl.⁶: $B66F\ 3/24$, $B62D\ 21/00$, $B62D\ 7/00$

(21) Application number: 97101382.6

(22) Date of filing: 22.07.1994

(84) Designated Contracting States:
AT BE CH DE DK ES FR GB GR IE IT LI LU MC NL
PT SE

(30) Priority: 23.07.1993 US 97265
28.09.1993 US 128070
26.01.1994 US 188137

(62) Document number(s) of the earlier application(s) in
accordance with Art. 76 EPC:
94922682.3 / 0 708 724

(71) Applicant: **LEONARD STUDIO EQUIPMENT INC.**
**North Hollywood California 91605 (US)**

(72) Inventor: **Chapman, Leonard T.**
**North Hollywood, CA 91605 (US)**

(74) Representative: **Viering, Jentschura & Partner**
**Postfach 22 14 43**
**80504 München (DE)**

Remarks:
• This application was filed on 29 - 01 - 1997 as a
divisional application to the application mentioned
under INID code 62.
• Amended claims in accordance with Rule 86 (2)
EPC.

(54) **Camera Pedestal**

(57) A camera dolly or pedestal (27) reduces unwanted sudden camera movement when the dolly wheels (104) roll over a bump or crack on the floor. The dolly wheels (104) have a rocker suspension (30) which can be used with a bogey wheel system (80) which offsets the dual wheel sets (104a, 104b) of the dolly (28). The dolly chassis may be advantageously split into two sections (202, 204) journalled together to achieve the benefit of both 3 point and 4 point suspensions. A column drive to achieve the benefit of both 3 point and 4 point suspensions. A column drive system (310) has a hydraulic actuator (306) to remotely raise the column assembly (300), and to lock the column assembly (300) into any selected position.

Fig. 1

EP 0 775 664 A2

**Description**

<u>TECHNICAL FIELD OF THE INVENTION</u>

This application relates to the field of camera dollies or pedestals used in the television and motion picture industries. In the production of television programs or motion pictures, it is often necessary to maneuver a camera between different filming positions. The required camera movement may include elevating and lowering the camera as well lateral and longitudinal movement between the camera and subject. Continuous translation of the camera, i.e., to follow an action or moving sequence is also occasionally called for. Camera cranes and dollies are employed to support the camera and perform the desired camera movement.

It is important for the camera dolly to provide a stable platform for the camera, both at rest and when moving, since any shock, vibrations, jarring or rocking imparted by the dolly will cause the recorded film or video image sequence to "jump" unacceptably.

Frequently, a camera pedestal or dolly supporting a television camera will be used on a theatrical or sound stage. The dolly wheels often roll over bumps on the stage floor, such as, e.g., carpeting edges, etc. If rolling on track, the dolly wheels will encounter bumps in between misaligned track sections. Advantageously, the camera dolly should include a mechanism for reducing the disturbance caused by such imperfections on the floor or track.

Generally, camera pedestals are raised and lowered by hand. This requires that the "grip" or pedestal operator be on or next to the camera pedestal to change the elevation of the camera. Moreover, obtaining a smooth change in elevation during a filming sequence depends on the skills and steady hand of the pedestal operator.

The foregoing description of camera dollies applies equally as well to camera pedestals, and the terms dolly and pedestal are used herein interchangeably.

Accordingly, it is an object of the invention to provide a camera pedestal having an improved design which provides for smoother camera movement when bumps, cracks, etc. in the floor are encountered.

It is a further object of the invention to provide a camera pedestal having a hydraulic column drive system for automatically raising and lowering the camera.

Other and further objects and advantages will appear hereinafter.

<u>BACKGROUND ART</u>

This application describes improvements to the basic inventions shown in PCT/US91/06708, International Publication No. WO 92/06034, incorporated herein by reference.

<u>DISCLOSURE OF THE INVENTION</u>

To these ends, a rocker suspension for the wheels of a camera dolly includes axle support plates on both sides of the kingpin. The axle support plates are pivotally attached to rocker links which in turn are pivotally attached to the kingpin. The rocker suspension reduces unwanted movement of the camera dolly when the dolly wheels roll over a bump, crack, or other irregularity on the floor surface.

A bogey wheel system allows the inside and outside wheels of the dual wheel sets of the dolly to be offset slightly from each other in the front to back direction. The offset wheels improve the performance of the rocker suspension.

The dolly chassis is split into forward section and a rear section which are joined through a journal, to allow the front and rear sections of the dolly to pivot with respect to each other. Preferably, a movement limiter dampens and limits movement between the front and rear dolly sections.

A column drive system includes a hydraulic system preferably provided as an accessory attached to the pedestal. The hydraulic system exerts hydraulic pressure on the piston to raise the column. The hydraulic system can be compact and lightweight as it need only overcome friction and inertial forces, and not payload weight which is compensated for by the compressed gas also acting on the piston.

<u>BRIEF DESCRIPTION OF THE DRAWINGS</u>

Fig. 1 is a perspective view of the camera dolly of WO 92/06034 supporting a television camera;

Fig. 2 is a partial section view of a rocker suspension for the wheels of the dolly shown in Fig. 1;

Fig. 3 is an exploded perspective view of the rocker suspension;

Fig. 4 is a schematic drawing showing operation of the rocker suspension;

Fig. 5 is an enlarged schematic drawing further illustrating operation of the rocker suspension;

Fig. 6 is a side elevation in view in part section of a bogey wheel system;

Fig. 7 is an exploded partial perspective view of the bogey wheel system of Fig. 6;

Fig. 8 is a perspective view of the inside of the axle cap of Fig. 6;

Fig. 9 is a top section view of a dual wheel set showing operation of the bogey wheel system;

Fig. 10 is a plan view of an axle rocker/bogie wheel suspension system;

Fig. 11 is a side view thereof;

Fig. 12 is a perspective view of a kingpin for use with the axle rocker/bogie shown in Fig. 10;

Fig. 13 is a plan view of a camera dolly having a split chassis;

Fig. 14 is a partial perspective view thereof;

Fig. 15 is an enlarged perspective view of the dolly of Fig. 14;

Fig. 16 is a partial section view taken along line 16-16 of Fig. 13;

Fig. 17 is a partial section view fragment taken along line 17-17 of Fig. 15;

Fig. 18 is a partial section view of an alternative preferred embodiment of a limiter having an adjustable dampening feature;

Fig. 18a is a partial section view fragment of a modification of the design of Fig. 47;

Fig. 19 is a schematic illustration of the tilt line of a 3-point suspension pedestal;

Fig. 20 is a schematic illustration of the tilt line of a 4-point suspension dolly or pedestal;

Fig. 21 is a schematic illustration of a hydraulic column drive system;

Fig. 22 is a partial section view taken along line 22-22 of Fig. 21;

Fig. 23 is a partial section view of an alternative column assembly adapted to receive the column drive system of Fig. 21;

Fig. 24 is a section view of a sealing plug for sealing the column when the drive system accessory of Fig. 23 is not installed; and

Fig. 25 is an alternative design roller block for use in the column shown in WO 92/06034;

MODES FOR CARRYING OUT THE INVENTION

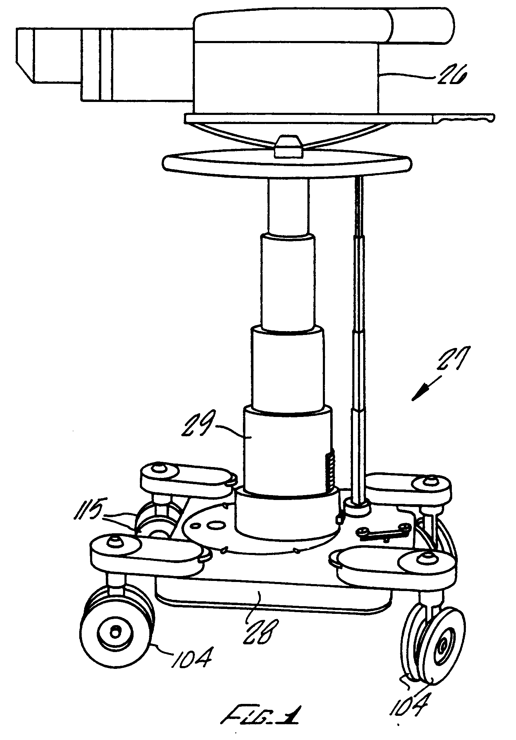

As shown in Fig. 1, a television or motion picture camera 26 is mounted on to a dolly/pedestal unit 27 comprising a dolly 28 and a removable column 29, as described in WO 92/06034.

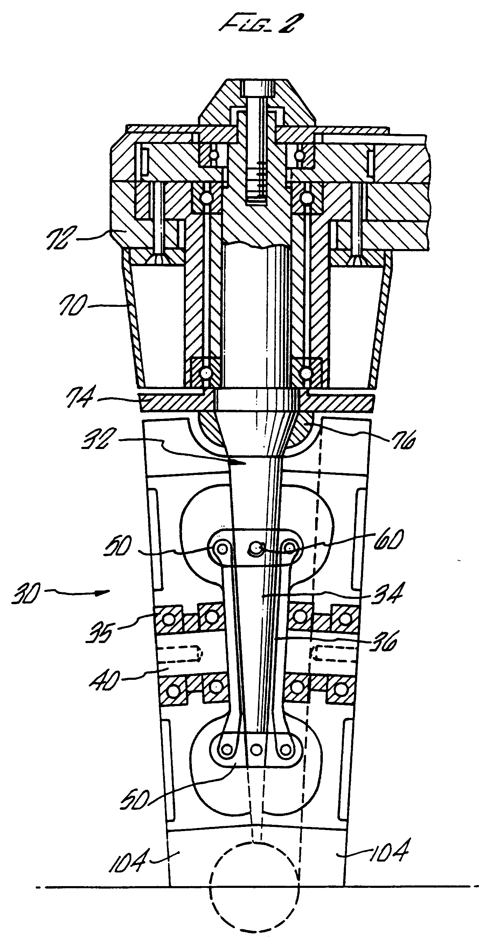

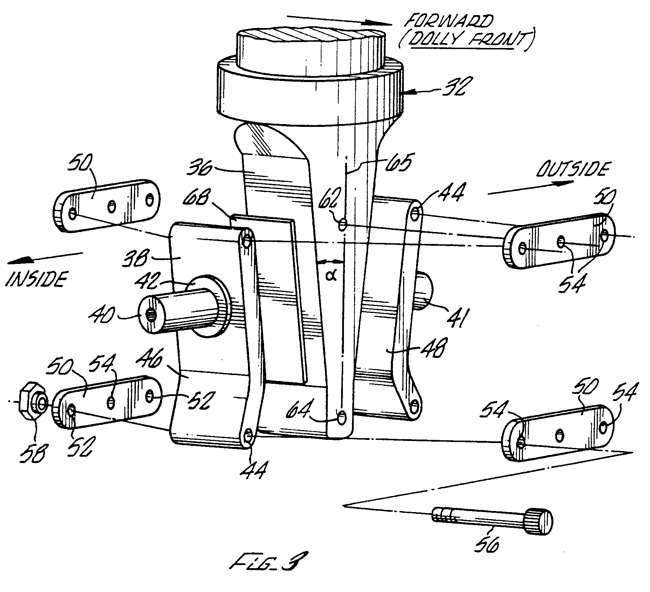

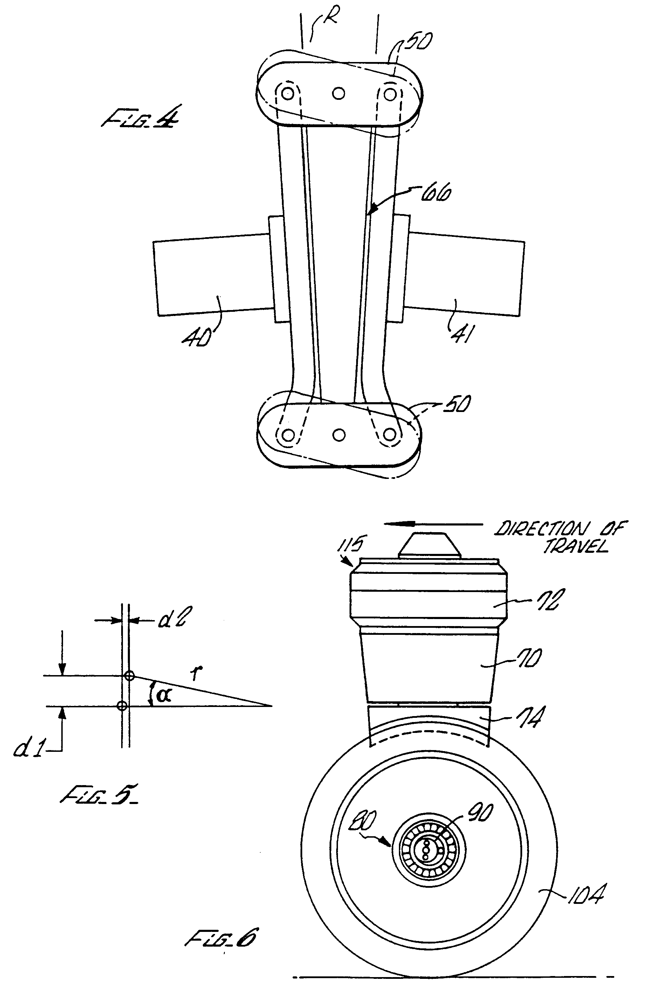

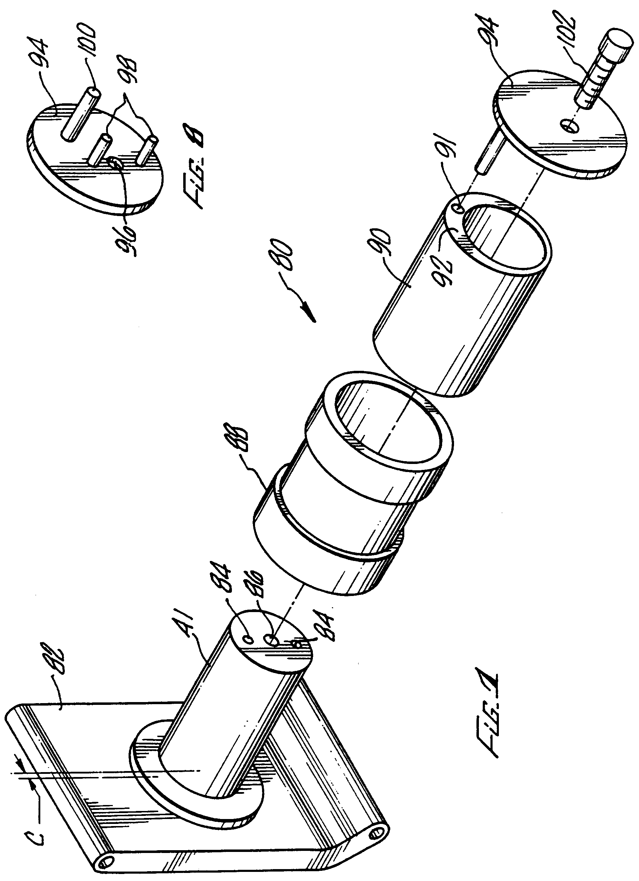

As shown in Figs. 2 and 3, a rocker suspension 30 for the wheels of the dolly includes a kingpin 32 having a lower section 34 with flat sides 36. (In contrast, the kingpin as shown for example in Fig. 5, of WO 92/06034, has integrally attached axles.) Axle support plates 38 and 39 have axles 40 and 41 for supporting the dolly wheels 104. Holes 44 extend through the upper and lower ends of the axle support plates 38 and 39. The lower ends 46 and 47 of the axle support plates are inclined away from the sides 36 of the kingpin 32 so that the holes 44 are vertically aligned. The axle support plates 38 and 39 have flat back surfaces 48 and are attached to the kingpin 32 via four rockers 50. Each rocker 50 has two end holes 52 and a center hole 54. Four plate mounting bolts 56 pass through the end holes 52 of the rockers 50 and the holes 44 in the axle support plates 38 and 39, and are secured by lock nuts 58. Two rocker mounting bolts 60, which are preferably identical to bolts 56, pass through the center holes 54 of the rockers 50 and pass through the upper and lower rocker mounting holes 62 and 64 in the kingpin 32, and similarly are secured by locknuts 58.

Referring to Fig. 4, a small gap 66 ordinarily remains between the flat back surface of the axle support plate 38 and the flat sides 36 of the kingpin 32. The rocker suspension components are preferably machined to close tolerances to minimize play.

A non-metal lining material 68 (Fig. 3) may be provided in between the kingpin and the flat back surfaces 48 (parallel to the kingpin flat sides 36) of the axle support plates 38 and 39 to prevent metal to metal contact and provide a somewhat resilient stopping surface. In addition, a block of foam rubber may be placed and secured over the lining material to keep dirt out and provide damping. Optionally, locking holes may be provided in the kingpin and axle support plates, so that a locking pin may be installed to lock out any rocker movement in special applications, e.g., where the floor has many depressions or hollows but not bumps.

In operation, as the dolly rolls across a smooth floor, the rocker suspension 30 remains balanced, with the rockers 50 horizontal, as shown in solid lines in Fig. 4. When one of the tandem wheels encounters a small obstruction (e.g., a crack in the floor, or debris such as paper, tape, etc. left on the floor), the, e.g., left wheel is forced upwardly. Correspondingly, the left axle support plate 38 is driven upwardly, while at the same time the right axle support plate is urged downwardly. However, as shown in Figs. 4 and 5, due to the rocker geometry, the tandem wheels stay parallel to each other. In addition, the vertical displacement of the kingpin is reduced by half. For example, if the left wheel rolls over a 2mm obstruction, the kingpin 32 moves upwardly by only 1mm. In contrast, with the dolly of WO 92/06034, vertical movement of the kingpin would be equal to the height of the obstruction. Movement of the rockers and plates 38 is limited by the back surface of the plate 48 stopping against the flat sides of the kingpin 32.

In addition, horizontal forces generated by rolling over obstructions on the floor are minimized by the rocker suspension 30. As illustrated in Fig. 5, when a bump is encountered, the axle support plate 38 moves upwardly along radius R. The vertical displacement d1 of the axle support plate 38 varies with the sine function, whereas the horizontal movement d2 varies as a cosine function ($d2 = r{-}r \cos \alpha$). Consequently, horizontal forces on the camera dolly are advantageously reduced. Where the r value is large compared to $\alpha$, the d1 dimension is significantly larger than the d2 dimension.

Referring back to Fig. 2, a shroud 70 is attached to the lower leg frame 72. The shroud is preferably tubular with a slight conical taper. A disk 74 is attached to the kingpin 32 with set screws, at a position immediately below the shroud 70. The disk 74 has a dome 76 protruding from its lower surface. The shroud 70, disk 74 and dome 76 are provided to help avoid the possibility of cables draping downwardly from a camera supported on the dolly, from snagging around the kingpin. The dome 76 projects downwardly on the kingpin 32 facing the contoured sections of the wheels, and leaving only a very small amount of open space, large enough, however, to allow for rocker movement but not enough to allow for cable snagging.

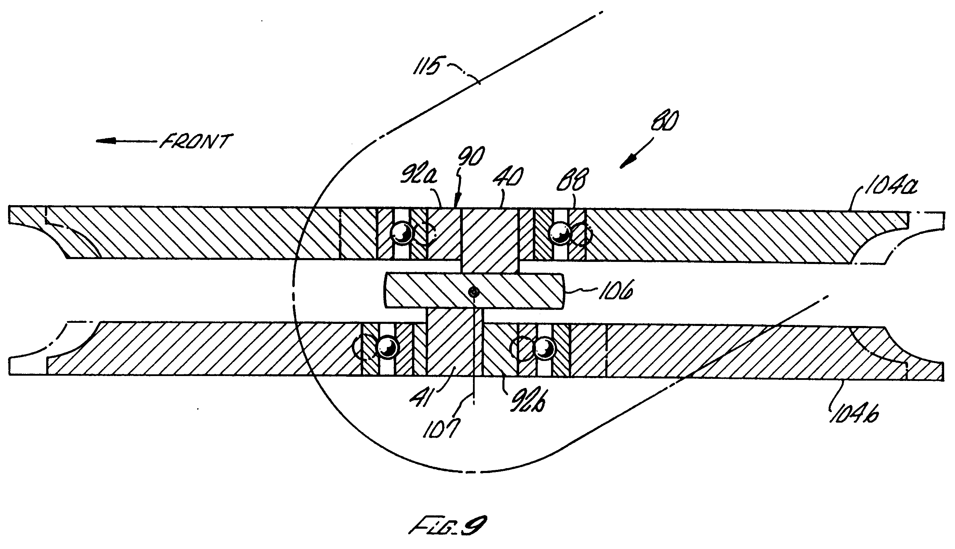

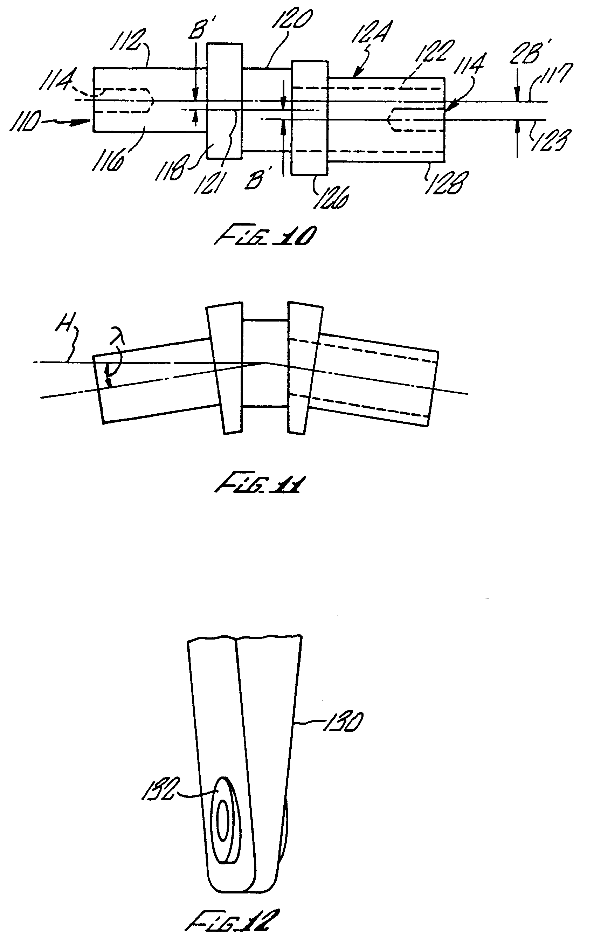

Turning to Figs. 6, 7 and 8, a bogey wheel system 80 can also be used with the rocker suspension 30 shown in Fig. 2 and 3. As shown in Fig. 7, the bogey wheel system 80 includes an axle support plate 82, which may be similar or identical to the axle support plate 38 shown in Fig. 3, but further including two cap holes 84 on opposite sides of the axle center hole 86, and having an offset axle as further described below.

A wheel bearing 88 is similar to the bearing 35 (shown in Fig. 2), but preferably includes a larger inside diameter or bore. A cam 90 having a cam lobe 92 is slidably and rotatably installed onto the axle extending from the axle support plate 82, with the bearing 88 supported on and around the cam 90. A cam drive hole 92 extends into the cam 90.

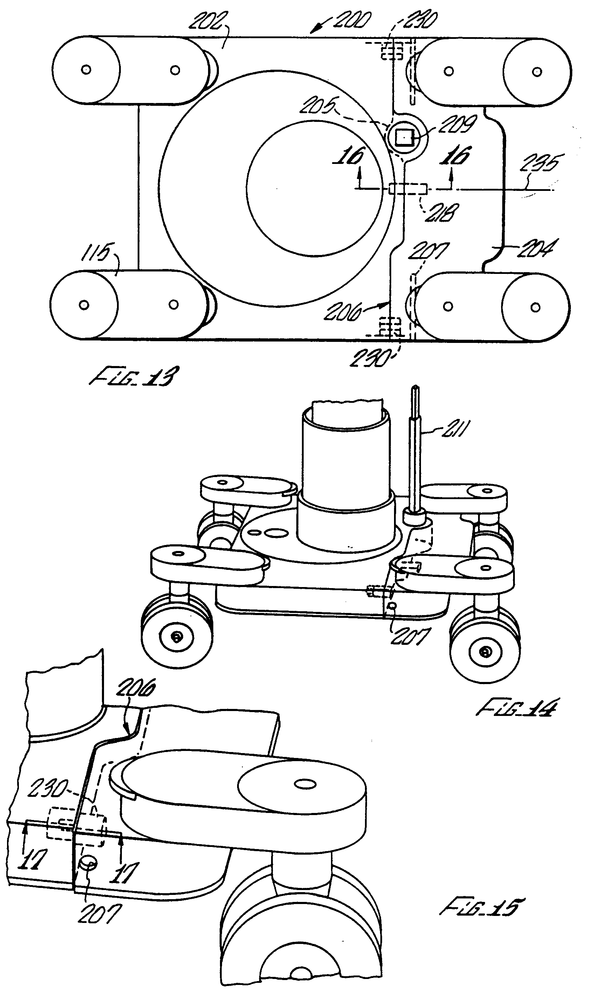

An axle cap 94 has a center hole 96. As shown in Fig. 8, cap pins 98 extend from the inside face of the axle cap 94, on opposite sides of the center hole 96. A cam pin 100, significantly longer than the cap pins 98 also extends from the inner face of the axle cap 94. The cap pins 98 have rounded ends and are configured to slidably engage into the cap holes 84 in the axle.

Referring to Figs. 6 and 7, a center bolt 102 passes through the center hole 96 in the axle cap 94 and threads into the axle center hole 86, to secure the axle cap 94, cam 90, and the bearing 88 onto the axle (with the cap pins 98 sliding into the cap holes 84 and the cam pin 100 sliding into the cam drive hole 92), such that the axle cap 94 is clamped against the end of the axle. For illustration purposes only, the hub and wheel 104 shown in Fig. 6 are omitted from Fig. 7.

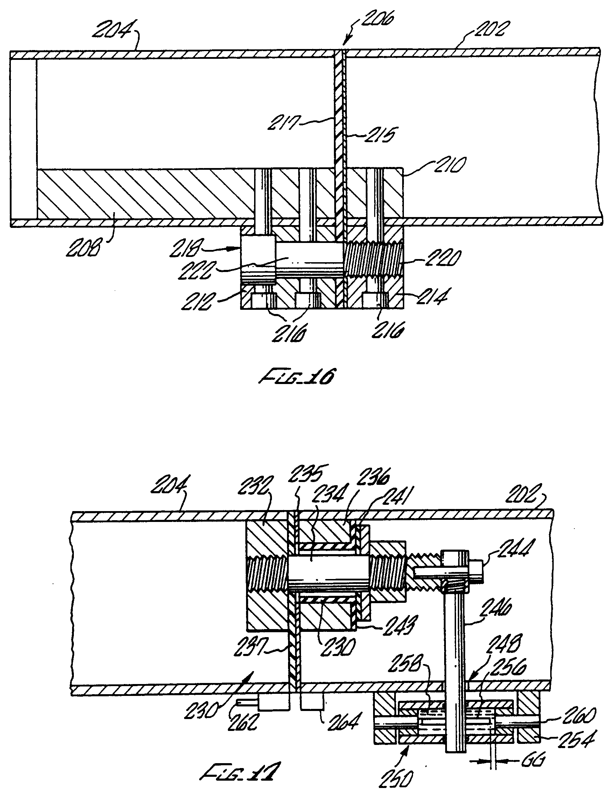

With reference to Fig. 3, if the rocker suspension 30 is used without the bogey wheel system 80, the axles 40 and 41 are preferably located on the centerline 65 of each axle support plate which in turn are centrally positioned on the kingpin 32. The axles 40 and 41 are then laterally (in the front to back direction) aligned with each other, as are the wheels 104. On the other hand, as shown in Figs. 7 and 9, where the bogey wheel system 80 is used with the rocker suspension 30, the axles 40 and 41 are oppositely offset from the aligned centerlines of the axle support plates by a dimension "c" preferably equal to the dimension of the cam lobe 92, e.g., 1-2mm. (The direction of the mutual offset can be with either side leading.)

Fig. 9 illustrates the operation of the wheel bogey system, used with or without a rocker suspension. With the inside axle 40 permanently offset by, e.g., 1.6mm to the rear of the center on the kingpin 106, the inside wheel 104a would ordinarily be positioned 1.6mm behind of the kingpin centerline 107. However, with the inside cam lobe 92a positioned to the front on the axle 40, and a bearing 88 positioned around the cam 90a, the inside wheel 104a remains on the kingpin and nominal rotation centerline 107.

Similarly, even though the outside axle 41 is permanently offset to the front of the kingpin 106 with the outside cam lobe 92b positioned to the rear, the outside wheel 104b remains on the kingpin centerline 107. The kingpin centerline 107 passes through the center of rotation of the kingpin 106. The inside and outside axles are preferably offset by twice the cam lobe height. When the inside and outside cams are turned 180°, the cam lobes add to rather than negate the offset of the axles, and the wheels then have a maximum offset, as shown in phantom lines in Fig. 9, of 4 times the cam height. While Fig. 9 shows offset axles attached directly to the kingpin, the same configuration and geometry can be used with an embodiment having axles offset on axle support plates linked to the kingpin by rockers, as shown in Fig. 2. Of course, the amount of offset can be varied with different applications, a 1.6mm cam lobe height and 3.2mm axle offset being typical of one example.

In use, the dolly will often encounter a crack or other obstruction perpendicularly, i.e., both wheels of the dual wheel set will roll over the crack at the same time. In this circumstance, the advantage of the rocker suspension 30 is lost, as both wheels necessarily move up or down over the obstruction together thereby preventing any rocker movement. In addition, the dolly may be used on dolly track when movement over an irregular surface (e.g., unpaved ground, sand, grass, etc.) is required. Small gaps or misalignments may be present at the joints between track sections. The rocker suspension 30 by itself, is similarly not effective at smoothing out bumps between track sections, as both wheels of the dual wheel set pair roll over the joint at the same time.

The bogey wheel system 80 allows the wheels to be offset from each other in the direction of travel, thereby allowing the rocker suspension 30 to effectively operate even on track joints and perpendicular crossings of floor cracks, etc. The bogey wheel system 80 is preferably provided on the inside and outside wheels of each of the four dual wheel sets of the dolly. Fig. 9 shows the design for the front left leg 105 wheel set of the dolly, the other three corners having the same design.

As best shown in Fig. 7, to engage the bogey wheel system 80 (for example on the outside wheel of the dual wheel set), the center bolt 102 is loosened and the axle cap 94 pulled outwardly until the cap pins 98 are withdrawn from the cap holes 84. The axle cap 94 is then rotated 180 degrees until the cap pins 98 once again align with the cap holes 84. The cam pin 100, being substantially longer than the cap pins 98 remains engaged into the cam drive hole 91. Consequently, the cam 90 turns with the axle cap 94 such that the cam lobe 92 is moved to the front of the axle. The bearing 88 and wheel 104, which are supported on the cam 90 necessarily shift forward by twice the amount of the cam height or offset (i.e., from offset to the rear to offset to the front). The cap pins 98 are reinserted into the cap holes 84 and the center bolt 102 tightened to hold the axle cap 94, cam 90, bearing 88 and wheel 104 into position on the axle.

If this same procedure is performed on the inside wheel 104a, the cam is turned 180° from the front to the back of the axle, and the inside wheel is shifted by twice the cam height to the rear. Hence, the outside wheel is offset in the direction of travel from the inside wheel by four times the height of the cam lobe as shown in Fig. 9. Preferably, this procedure is used on all four of the dual wheels sets. Consequently, as the dolly moves forward and encounters a crack perpendicularly, the outside wheel will ride over the crack first, followed by the inside wheel. Since the wheels do not ride over the crack simultaneously, the rocker suspension 30 operates effectively, as described above.

With a 1.6mm cam height, the wheel separation will be 6.4mm. This separation should be sufficient for most applications.

In principle, the bogey wheel system 80, as shown in Fig. 7, could be provided on only one wheel of the pair, e.g., on the outside wheel 104b. Then, the wheel position would be shifted only by twice the height of the cam lobe, as the cam is turned 180°. On the other hand, with the bogey wheel system 80 on both wheels, as preferred, a smaller offset can be achieved by engaging or turning only the inner or outer axle cap from its nominal position. If larger offset is desired between the wheels, the cam 90 can be provided by a higher cam lobe and a larger wheel bearing used.

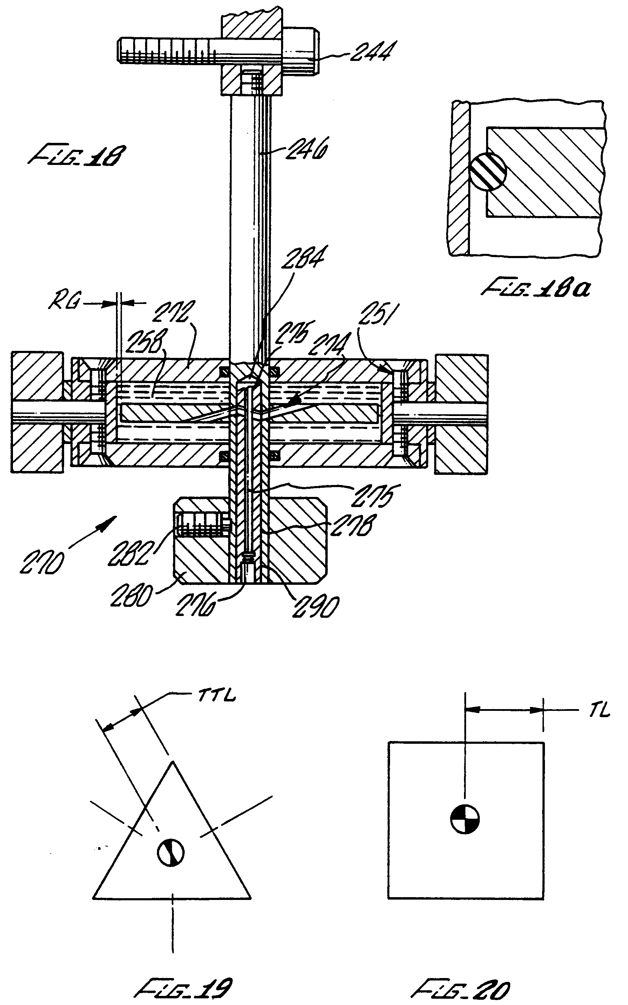

Figs. 10-12 show an alternative axle rocker/bogey wheel suspension system 110. Referring to Fig. 10, the axle rocker/bogey suspension 110 includes an offset shaft 112 having threaded bores 114 at each end. The first end of the offset shaft 112 forms a first axle 116. A shoulder 118 separates the first axle 116 from a bearing shaft 120. The centerline 121 of the bearing shaft 120 is offset from the centerline 117 of the axle 116 by an offset dimension B'. The offset shaft 112 includes an offset axle section 122 (shown in phantom in Fig. 10) which has a centerline 123 offset from the centerline 121 of the bearing shaft 120 also by an offset dimension B'. Thus, the centerline 123 of the offset axle section 122 is displaced or offset from the centerline 117 of the first axle 116 by an offset of 2 B'. The offset axle section 122 is preferably threaded. A shoulder axle 124 includes a shoulder 126 and a second axle 128, and can be threaded onto the offset axle section 122. Alternatively, the shoulder axle 124 can be pressed onto the offset axle section 122.

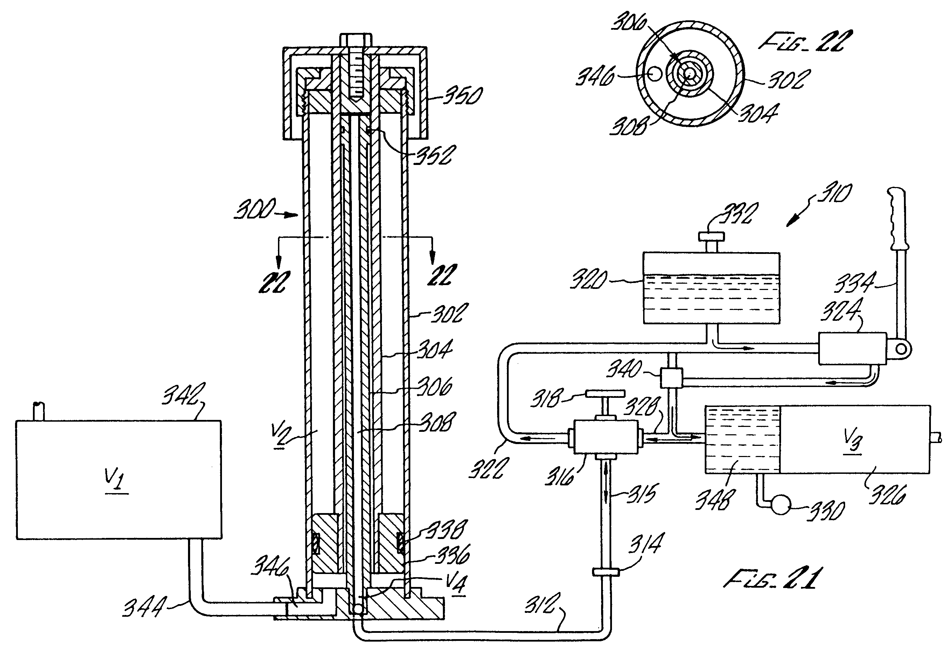

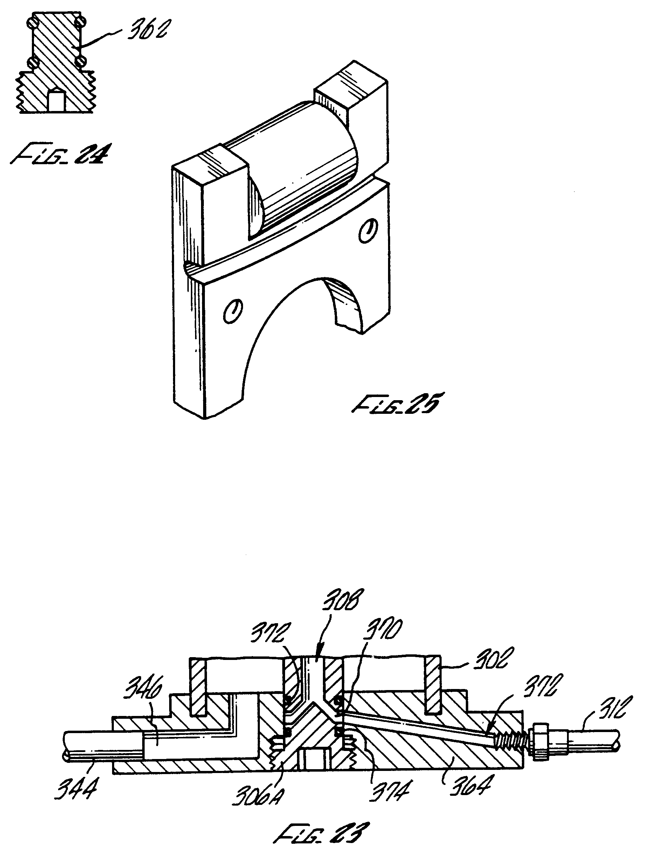

Referring to Fig. 11, the first axle 116 and the second axle 128 decline at an angle λ from horizontal H. The angle λ may range from 2-10° and is preferably 4°. Turning to Fig. 12, the kingpin 130 has angled sides such as kingpin 32 (Fig. 3) but includes a bearing 132 having flat vertical ends. The offset shaft 112 (without the shoulder axle) is installed on the kingpin 130 by extending the offset axle section 122 through the bearing 132, with the bearing shaft 120 coming to rest within the bearing 132, and the shoulder 118 resting against the flat vertical first side of the bearing 132. The shoulder axle 124 is then threaded onto the offset axle section 122 extending outwardly from the bearing 132, with the shoulder 126 clamped against the opposite or second flat vertical side of the bearing 132. Cams, wheel bearings, wheels and axle caps (as shown in Figs. 7 and 8) can then be installed over the first axle 116 and second axle 128.

In operation, the offset centerlines between the first and second axles, as shown in Fig. 10, allow the axle rocker/bogey suspension system 110 to provide a rocker movement. When the leading wheel encounters a bump, the leading axle pivots or rotates upwardly, and correspondingly, the lagging axle pivots downwardly about the bearing 132, to provide a rocker action. The cams installed over the first and second axles, such as the cam shown in Fig. 7, can be turned to set the bogey offset of the wheels from 0 to a maximum offset determined by the B' dimension and the cam height (preferably about 3mm each).

In theory, "perfect" dolly steering geometry contemplates that the inside and outside wheel of the dual set should be aligned (laterally) with each other in the direction of travel. Accordingly, in principle, the front to back wheel offset provided by the bogey wheel system 80 introduces imperfection to the steering geometry of the dolly, with increasing shift causing increasing imperfection. The imperfect steering geometry may disadvantageously increase rolling resistance; add resistance to steering; cause wheel scrubbing, etc.

However, the offset introduced by the bogey wheel system is small enough to maintain good steering geometry, yet large enough to allow the rocker suspension 30 to effectively operate over a much broader range of floor and track conditions. For certain applications, the bogey wheel system 30 may be left engaged over a relatively long term. In other applications; the bogey wheel system 30 may be engaged only for a specific camera shot or other use and then disengaged to return to "perfect" steering geometry. In either event, the bogey wheel system 30 can be quickly and conveniently engaged and disengaged merely by loosening the center bolt 102 and turning the axle cap 94.

To reduce wheel scrubbing or squawking, rubber tires filled with 2-5% silicone, and preferably 3% silicone are used. These tires, available from Peterson Systems International, Duarte, California, U.S.A., have built-in lubrication to reduce friction. Hence, the tire offset or bogey can be increased without unduly increasing scrubbing due to imperfect steering geometry.

Turning to Figs. 13, 14 and 15, in a split chassis dolly or pedestal 200, the chassis is divided into a forward section 202 and a rear section 204, separated by a small gap 206. The gap 206 extends entirely across the chassis. The gap or cut line 206 is located just forward of the accessory pockets 207, on either side of the chassis and loops rearwardly around the steering drive tube 209. Within the chassis, the crab belt and the first ratio belt (as described in WO 92/06034) extend across the gap 206, while all of the other belts remain in the rear section 204.

In an alternative embodiment, the cut line 205 loops in front of the steering drive tube 209 as shown in phantom in Fig. 13. In this embodiment, only the crab belt passes across the cut line 205. Rollers are provided around the steering drive tube 211 at the top sprocket (not shown) to accommodate the displacement of the steering drive tube as the front and rear chassis sections shift relative to each other.

Preferably a rubber decking material overlies the cut line 206 to keep dirt out of the chassis. The rubber decking material may overlie a foam rubber base to maintain relatively free pivoting movement of the chassis sections. Alternatively, the decking material may have a razor slit to minimize entry of dirt into the chassis, without restricting chassis movement at all.

Referring to Fig. 16, the rear chassis section 204 has a rear boss 208, and the forward chassis section 202 correspondingly has a front boss 210. A split rear journal block 212 is attached to the rear boss 208 with bolts 216. Similarly, a split front journal block 214 is attached to the front boss 210 by bolts 216. A journal bolt 218 has a threaded end 220 irrotatably engaged into the front journal block 214. The clamping bolts 216 are tightened to clamp the split journal block around the journal bolt 218. A journal shoulder 222 on the journal bolt fits within the rear journal block 212. The bore in the rear journal block 212 is advantageously smoothly polished, greased and dimensioned to allow low friction rotational movement between the rear journal block 212 and the journal bolt 218, with minimum play or translational movement. The journal bolt 218 is centered on the lateral center line 235 of the dolly (Fig. 13).

Referring still to Fig. 16 a polished steel face plate 215 is attached to the forward section 202, extending vertically from the top surface of the forward section to the bottom surface of the front journal block 214, and horizontally preferably for about 25-75mm on either side of the journal bolt 222. The journal bolt 218 passes through a clearance hole in the face plate 215. A matching Teflon bearing plate 217 is correspondingly attached to the rear section 204, and is in sliding contact with the face plate 215. The Teflon-polished steel engagement provides a low friction sliding interface between the two chassis sections. Preferably, the gap 206 is about 5mm wide, the face plate 215 is about 1-2mm thick, and the Teflon bearing plate 217 is about 2-4mm thick, with the gap therefore filled in by the plates 217 and 215, which bear against each other. The face plate 215 is backed and supported by the structure of the forward chassis section.

As the journal bolt nominally carries substantial forces and moments applied between the forward and rear chassis sections, the journal bolt 218 is preferably an approximately 16mm diameter bolt. The connection between the front and rear chassis sections through the journal bolt preferably allows only purely rotational movement between the chassis section.

Referring to Fig. 15 and Fig. 17, a limiter 230, for limiting pivoting movement between the front and rear chassis sections, includes a stud block 232 attached to the underside of the top of the rear section 204. A stud 234 extends forward from the stud block 232 into the forward chassis section 202. A bushing block 236 is joined to the underside of the top of the forward chassis section 202, in alignment with the stud block 232. Optionally, a rubber bushing 238 within the bushing block 236 surrounds the stud 234. A lock nut 242 (or two nuts, one locking the other) holds a steel backing washer 120 against a Teflon washer 241 along side of a polished steel plate 243 attached to the bushing block 236. The Teflon washer 241 sliding on a polished steel plate surfaced or attached to the bushing block 236 provides a low friction interface so as not to inhibit movement.

A pivot bolt 244 extends through a clearance hole in the top end of a dampening shaft 246 and into the forward end of the stud 234, such that the dampening shaft 246 is pivotally attached perpendicularly to the stud 234. The dampening shaft 246 extends through a clearance opening 248 in the bottom surface of the forward chassis section 202 and into a dampening cylinder 250. A ring frame 254 attached to the lower surface of the forward chassis section 202 and a cylinder retainer 260 support the dampening cylinder 250. The dampening cylinder 250 is filled with a viscous fluid 258, preferably pure silicone fluid. Seals 252 around the dampening shaft 246 allow the dampening shaft 246 to shift vertically within the dampening cylinder 250 without loss of fluid. A drag plate 256 is attached to the dampening shaft 246 within the dampening cylinder 250. Fig. 17 shows the nominal position wherein the forward and rear chassis sections are aligned, the stud 234 is centered and spaced apart from the bushing 238 and the drag plate 256 is centered vertically within the dampening cylinder 250.

As shown in Fig. 17, a face plate 235 and bearing plate 237, similar to face and bearing plates 215 and 217, are provided around the stud 234. Preferably, the stud 234 is positioned about 5cm from the side of the chassis, with the face and bearing plates 235 and 237 having clearance holes for the stud 234. Other low friction interfaces, such as DU bushings or bearings may also be used in place of the face and bearing plates 215, 217, 235, 237 and 243.

In the preferred embodiment, two limiters 230 are provided at the sides of the chassis, as shown in Fig. 13. Preferably, the limiter is widely spaced apart from the journal 218, so that the limiter encounters lower forces.

In operation, with the dolly on a smooth flat surface, the front and rear chassis sections are aligned and in the nominal position. In this nominal position, the stud 234 is spaced apart from the bushing 238, and the drag plate 256 is centered in the dampening cylinder 250. Thus, only the journal bolt 218 and stud(s) 234 structurally connects the front and rear chassis sections. When the dolly is moving and a wheel on the dolly shown rolls over a bump, crack, etc., the dolly reacts in substantially the same manner as the solid chassis embodiment shown in WO 92/06034. (The dolly or pedestal 200 is not power driven, rather it is pushed by the operator.)

The rolling movement over a crack or bump occurs sufficiently quickly such that the viscous damping provided by the limiter 230 holds the forward and rear chassis sections in position. Specifically, the viscous resistance of the drag plate 256 in the dampening fluid 258 substantially prevents any movement in response to short duration impulses, caused, e.g., by a bump or crack. No significant rotational movements occur from such transient effects.

However, when the dolly 200 is at rest, there is sufficient time for rotational movement between the front and rear chassis sections, notwithstanding the viscous drag provided by the limiter 230. Accordingly, if the dolly 200 comes to rest with a wheel on a bump or crack, the dolly 200 may initially be unstable with a potential for undesirably rocking back and forth (like a four-legged table having one short leg). However, after a few seconds, the dolly 200 "stabilizes". Even relatively low forces or moments acting on the front or rear chassis sections, due to an imperfection such as a bump or crack in the supporting floor surface, will cause the front and rear chassis sections to rotate slightly with respect to each other. Under relatively long duration forces (in contrast to intermittent forces encountered during dolly movement), compensating rotational movements between the chassis sections occurs despite the dampening or viscous effect of the limiter. The dolly wheels correspondingly move up or down to positions wherein they are all supported by the floor. The stationary dolly will then be stable and the potential for rocking eliminated. Consequently, after even only a few seconds, if the dolly is pushed or pulled to begin another rolling movement, the initial horizontal force on the dolly will not cause the dolly to tip or rock. Rather, the dolly will roll smoothly off of the bump or crack.

The journal feature of the split chassis embodiment may be locked out by sliding a locking pin 262 on the front chassis section into a receptacle 242 on the rear chassis section, as shown in Fig. 17.

As shown in Fig. 17, after a small amount of movement, preferably a shift of approximately 1 to 6mm at the sides of the dolly 200, the stud 234 may contact the bushing 238, which provides a soft, silent but firm stopping point, thereby limiting the rotational movement between the forward and rear chassis sections. However, ordinarily the limiter prevents the stud from moving out of its nominal working range.

Although the crab belt and first ratio belt pass between the front and rear chassis sections, they cross over (laterally) near the journal. Thus, the relative movement between the chassis sections is small enough to be accommodated by the belts without difficulty. In addition, the journal is positioned high vertically away from the floor and close to the belts for the same reason. While in this high position, the journal is not as well located for resisting the horizontal forces occurring as the pedestal rolls over bumps. However, a low journal position, i.e., very near the floor would be unduly disruptive to the belts crossing over between the chassis sections, as belt movement would be excessive. As shown in Fig. 17, the journal bolt is above the wheel axles, on the underside of the chassis.

To further reduce belt alignment variations during relative movement of the front and rear chassis sections about the journal, the crab belt adjustment pulleys can be supported by the rear chassis section with underside support plates. The pivot point of the belt is thus increased reducing unwanted forces. In addition, the first ratio drive belt idler may have a cam tensioner to allow compensation during relative movement of the front and rear chassis sections.

A limiter 270 having adjustable dampening, as shown in Fig. 18, is similar to the limiter shown in Fig. 17 but includes a drag plate 272 having a central through hole 274 passing from the top surface to the bottom surface of the drag plate 272. An adjustment shaft 278 extends into a bore at the lower end of the dampening shaft 246. The adjustment shaft 278 has a generally horizontal through hole vertically in alignment with the bore 274 passing through the drag plate 272. A hand knob 280 is attached to the adjustment shaft 278 by a press fit. A set screw 282 secures shaft 278 to shaft 246 while allowing 90° relative rotation. A socket cap screw 276 extends centrally into the lower end of the adjustment shaft 278, to provide access for bleeding the cylinder of air or excess fluid. Bleeder hole 290 provides for air or excess fluid removal through bore 275 and is closed off in use by the cap screw 276. A small annular gap, preferably approximately 0.05mm, designated as "RG" separates the drag plate 272 from the sidewalls of the limiter cylinder. The bore 274 may be advantageously dimensioned such that the area of the bore substantially equals the area of the annular gap. For example, with a gap RG of 0.05mm, the bore 274 would preferably be approximately 2.6mm in diameter.

To adjust the dampening provided by the limiter 270, the hand knob 280 may be rotated to incrementally align the hole 275 in the adjustment shaft 278 with the bore 274 passing through the drag plate 272. Thus, the hole 275 provides an adjustable bypass, which can be used to increase the flow area available to the silicone fluid 258, and correspondingly reduce the amount of dampening provided. For maximum dampening, the hand knob 280 is turned to align the hole 275 in the adjustment shaft 278 perpendicular to the bore 274, such that no fluid can flow through the bore 274, leaving only the annular ring opening available. For total damping control, an optional o-ring 292 (shown in Fig. 18a) can be attached around the outside edge of the drag plate 272 while using a lower viscosity fluid. The o-ring 292 seals against the cylinder walls 251 and prevents flow through the gap RG. Thus control knob 280 provides virtually 100% control of the dampening effect from hydraulically locked to minimum damping, as all fluid must pass through the bore 274, which is metered or throttled from fully open to fully closed by turning the adjustment shaft 278 using the hand knob. However, the embodiment of Fig. 18a must be used with care because if the bore 274 is entirely closed off, the limiter 270 will be hydraulically locked. Thus, with this embodiment, the front and rear chassis sections could inadvertently be locked into an uneven configuration.

In the embodiment shown in Fig. 17, with a radial clearance GG of 0.05mm and a silicone fluid viscosity of 12500 SSU, the forward and rear chassis sections react almost as if rigidly connected, and relative movement is highly dampened and slow, even with heavy payloads. Of course, the clearance GG and/or fluid viscosity in the embodiment of Fig. 17 can be varied to obtain different desired amounts of damping.

In the adjustable embodiment shown in Fig. 18, the dampening provided can be matched to the specific application. Various factors will determine the preferred amount of dampening for any application, including the payload, arrangement of the legs on the chassis, floor conditions, as well as the operator's personal preferences. Ordinarily, when operating over an exceptionally pitted floor surface, it is preferable to provide maximum dampening, to prevent the wheels from dropping into pits in the floor. On the other hand, on a bumpy floor, it may be preferable to reduce the amount of dampening provided to allow faster and easier movement between the front and rear sections as the wheels roll over the bumps.

For typical payloads (camera weight) of approximately of 55-160kgf, the drag plate dimension may be typically 35mm in diameter and a cylinder bore 1mm larger in diameter, using one limiter on each side of the pedestal.

In general, a principal advantage of 3-point suspension over 4-point suspension is that at rest all wheels of a 3-point suspension will "find" the ground, so that the dolly may not tip or rock. On the other hand, with 4-point suspension, rocking may occur due to imperfections in the floor. However, 4-point suspension provides improved rolling stability and tilt line performance. The tilt line geometry for 3 and 4-point suspensions is shown in Figs. 19 and 20. With 3-point suspension, as shown in Fig. 19, the tilt line dimension TTL will be less than the tilt line dimension TL for a 4-point suspension, as shown in Fig. 20, for dollies or pedestals of equivalent size. As illustrated in Figs. 19 and 20, with centered or offset centers of gravity, the 4-point suspension of Fig. 20 will have a larger tilt line dimension, and consequently provide more stability during movement. The dolly 200 operates like a 3-point suspension, when 3-point suspension is important (i.e., at rest) and like a 4-point suspension (with improved tilt line performance) when 4-point suspension is important (i.e., during movement). Accordingly, the advantages of both 3-point and 4-point suspensions are obtained.

As shown in Fig. 13, the chassis of the dolly (i.e., the combined forward and rear sections) is generally square. In the embodiment shown, the width is about 56cm and the length is about 66cm. The generally square shape allows the operator to work from all sides of the dolly. In contrast, with more traditional dollies, the operator or dolly grip would tend to work primarily at the back end of the dolly where the controls are located. With the pedestal column arranged near the center of the dolly, the center of gravity of the dolly is also substantially centrally located. Conventional dollies ordinarily have a center of gravity located close to the front wheels. The relatively small size and light weight of the present pedestal also present tilt line stability characteristics, center of gravity changes with payload vertical movement, and steering characteristics which are different from larger conventional dollies and stage cranes.

An automatic column assembly 351, as shown in Fig. 21, is similar to the column assembly shown in (Figs. 30-32 of) WO 92/06034, but includes a hydraulic system for automatically and/or remotely elevating the column. The column assembly 300 has a gas cylinder 302 and a drive rod 304 a hydraulic tube 306 having a central bore 308.

A compact hydraulic unit 310 is preferably provided as a self-contained unit attachable to the underside of the dolly. The hydraulic unit 310 is connected to the hydraulic cylinder 306 through a hose 312 and a quick disconnect hydraulic fitting 314 attached to the column.

The hydraulic unit 310 includes a three way closed center valve 316 having a control knob 318. The valve 316 is connected to a tank 320 via a return hose 322, which is also connected to a hand pump 324 or small motor driven pump. An accumulator 326 is connected to the pump by an accumulator hose 328, which also connects to the valve 316. A pressure gauge 330 shows the accumulator pressure. The tank 320 has a fill cap 332, which may be removed for filling the return tank. A hand lever 334 is used to drive the hand pump 324. Alternatively, the pump may be electrically driven. A piston 336 and seal 338 are attached around the drive rod 304. A pressure relief safety valve 340 between the accumulator and pump limits the maximum accumulator pressure to a preset pressure. If the preset pressure is exceeded, the safety valve 340 temporarily opens allowing hydraulic fluid to return to the return tank 320.

The pneumatic or compressed gas system of Fig. 21 is the same as shown in (Figs. 30 and 31) of WO 92/06034, including the compressed gas tank 342, gas lead tube 344. The gas inlet 346 is offset from the center of the gas cylinder 302.

The control valve 316 has three basic positions. In the open position, the control valve 316 connects the accumulator 326 to the bore 308 in the tube 306 (specifically through hose 315, and the cylinder hose 312.) In the closed position, the hose 315 is entirely closed off, as is the accumulator hose 328, such that there can be no flow through the valve. In the return position, the valve 316 connects the hose 315 to the return hose 322.

In use, the cylinder hose 312 is filled with hydraulic fluid. The connecting end of the cylinder hose 312 is sealed off by the quick disconnect fitting 314. The hydraulic unit 310 is attached to the dolly with the hose segment 315 from the control valve 315 connected to the cylinder hose 312 via the quick disconnect fitting 314.

With the valve 316 in the closed position, the hand pump 324 is operated by movement of the hand lever 334, or the pump is motor driven. This pumping action charges the accumulator 326 with hydraulic fluid 348 under pressure.

With a camera load on the column, the pneumatic or compressed gas system is charged with sufficient gas pressure to counterbalance the load as described in WO 92/06034. With the load appropriately balanced, raising or lowering the column requires only that inertial and frictional forces, and a small return or down force be overcome, as the camera load weight is nearly fully compensated by the pneumatic system. The small down force is selected to achieve the desired maximum down speed.

To automatically raise or extend the column, the valve 316 is turned to the open position. Hydraulic fluid under pressure flows from the accumulator 326 through the accumulator hose 328 and valve 316 into hose 315 then into the cylinder hose 312 and into the bore 308. The hydraulic fluid fills the bore 308 and pushes on the end surface of the drive rod 304, driving the core cylinder 350 and the column sections upwardly. The seal 352 seals the bore 308 against the inside surface of the hollow drive rod 304. The seal 352 may be located near the top or bottom of the bore 308.

The speed at which the column is raised may be controlled by the amount the valve 316 is opened. The rate of ascent is proportional to the amount the valve is opened. Correspondingly, deceleration of the column may be controlled by the speed and manner in which the valve 316 is once again closed. When the column has reached the desired height, the valve 316 is closed, and the column is hydraulically locked in position.

To lower the column, the valve 316 is placed in the return position, linking the hose 315 to the return hose 322 leading to the return tank 320. If the compressed gas in the gas cylinder 302 counterbalances the weight of the camera load, there is no net downward force acting to lower or retract the column. Accordingly, to lower the column, additional weight may be applied by e.g., pushing down by hand, thereby forcing the hydraulic fluid out of the bore 308, through the valve 316 and into the tank 320. Alternatively, some compressed gas can be released from the gas cylinder 302 when initial settings are made. This removes the counterbalancing compressed gas force and allows the column to retract under the payload weight. The up force capability of the accumulator 326 is sufficient to overcome this down force with equal or greater net up force.

Because the compressed gas system is used to counterbalance the payload weight, the hydraulic system need only overcome inertial and frictional and selected down loading forces. Correspondingly, the hydraulic unit 310 can be very lightweight and compact. In a preferred embodiment, the bore 308 has a diameter of about 10mm and an extension or travel of about 25cm, and an accumulator volume of 1 liter. A high pressure (about 200 kgf/cm$^2$) hydraulic system is used to achieve sufficient force acting on the relatively small area of the piston.

For ideal performance, the ratio of the volume $V_1$ of the compressed gas tank 342, to the volume $V_2$ of the compressed gas in gas cylinder 302, should equal the ratio of the volume $V_3$ of the accumulator to the volume $V_4$ of the displacement of the bore 308.

As the column assembly is hydraulically lifted, hydraulic fluid flows from the accumulator 326 into the bore 308, causing a decrease in hydraulic pressure as the column extends. For most applications, this pressure loss will be negligible. However, for applications requiring exceptionally precise camera movement, the drive rod 304 may be tapered on the inside, in the same manner as the gas cylinder 302, so that the effective area of the hydraulic tube 306 increases to offset falling hydraulic pressure, as the column extends.

The valve 316 may be controlled in a variety of ways. In one embodiment, a simple hand knob 318, extending from the hydraulic unit 310 may be turned by the operator to select the valve position, and the rate and amount of opening or closing. Alternatively, the valve 316 may be controlled by a remote unit adjacent to the dolly steering wheel or in a separate handheld device, linked to the valve by radio, infrared or a control cable. Buttons or switches on the remote control device can then select the desired valve position and rates of valve opening or closing, to thereby control the upward or downward acceleration and velocity of the column, as well as the ending position of the column.

As shown in Figs. 23 and 24, the dolly may be provided with the hollow drive rod 304 which will accommodate the retrofit hydraulic tube 306a. To retrofit the hydraulic drive system onto the pedestal, a sealing plug 302 (threaded into the bottom end cap 364 to seal dirt out of the column), is removed and the hydraulic tube 306a is installed, by threading the bottom of the tube 306 into the end cap 364. The hydraulic unit 310 is attached to the dolly as previously described.

The tube 306a has a circumferential groove 370 vertically aligned with the inlet 372 from the cylinder hose 312, so that hydraulic fluid may pass into the bore 308 without the need to radially align the tube 306a and inlet. O-ring 372 seals the pressurized gas in the gas cylinder 302 against the hydraulic tube 306a. O-ring 374 seals the end cap 364 against the hydraulic fluid.

The number and selection of components, and the dimensions, angles, capacities, etc. described are by way of example only. Of course, various others may be used as well.

The column assembly 351 may be provided as an accessory. The rocker suspension 30; the bogey wheel system 80; the rocker/bogey 110 and split chassis 200, may be used alone in combinations, as will be apparent to those working in this industry.

**Claims**

1. An adjustable camera pedestal comprising:

a hollow, tapered cylinder having a first end and a second end joined by a tapered wall, the second end having a cross section area greater than the first end;
a piston slidably displaceable within the cylinder;
a seal on said piston expandable to substantially seal the piston all along the tapered wall;
a column section attached to the piston; and a hydraulic actuator connected at least indirectly to the column section.

2. The camera pedestal of claim 1 further comprising an accessory hydraulic unit connected to the hydraulic actuator.

3. The camera pedestal of claim 1 wherein the hydraulic system comprises a three way valve, a return tank, a pump and an accumulator.

4. The camera pedestal of claim 1 further comprising a hollow drive cylinder within the tapered cylinder.

**Amended claims in accordance with Rule 86(2) EPC.**

1. A camera pedestal of the type having;

a hollow, tapered gas cylinder (202) having a first end and a second end joined by a tapered wall, the second end having a cross section area greater than the first end;

a compressed gas tank (342) connecting to the gas cylinder (302);

a piston (336) slidably displaceable within the gas cylinder (302);

a seal (338) on said piston (336) expandable to substantially seal the piston (336) all along the inside of the gas cylinder (302); and

a column section (350) attached to the piston (336);

characterized by:

a hydraulic unit (310) connected at least indirectly to the column section (350).

2. The camera pedestal of claim 1 further characterized by the hydraulic unit is a self-contained unit attachable to the underside of the pedestal.

3. The camera pedestal of claim 1 wherein the hydraulic unit includes a three way valve (316), a return tank (320), a pump (324) and an accumulator (326).

4. The camera pedestal of claim 1 further including a hollow drive rod (304) within the gas cylinder (302).

5. The camera pedestal of claim 2 including a hose segment (315) having a quick disconnect fitting (314) for connecting to a cylinder hose (312) leading into the gas cylinder (302).

6. The camera pedestal of claims 1 or 2 where the hydraulic unit (310) is lightweight and compact, because the compressed gas tank (342) contains compressed gas at a pressure to counter balance the payload weight, and the hydraulic unit (310) need only overcome inertial and frictional forces, but not gravitational forces, to move the payload.

7. The camera pedestal of claim 4 further including a hydraulic tube (306) within the drive rod (304).

8. The camera pedestal of claim 7 where the hydraulic tube (306) has a central bore (308) with a seal (352) sealing the bore (308) against the inside wall of the drive rod (304).

9. The camera pedestal of claim 8 wherein the central bore (308) has a diameter of about 10 mm and the hydraulic unit (310) develops a fluid pressure of about 200 kgf/cm$^2$.

10. The camera pedestal of claim 9 where the seal (338) slides along the inside wall of the gas cylinder (302) and the seal (352) slides along the inside wall of the drive rod (304), as the camera pedestal is raised and lowered.

11. The camera pedestal of claim 9 where the drive rod (304) is tapered in the same manner as the gas cylinder (302), so that the effective area of the hydraulic tube (306) increases to offset falling hydraulic pressure, as the column extends up.

12. The camera pedestal of claim 3 having a remote unit for controlling the valve (316).

*Fig. 1*

Fig. 2

FORWARD
(DOLLY FRONT)

32

50

36

68

65

62

44

OUTSIDE

50

3B

42

40

INSIDE

α

41

54

50

54

46

52

48

52

64

44

50

54

58

52

54

56

FIG. 3

Fig. 4

Fig. 5

Fig. 6

EP 0 775 664 A2

Fig. 8

Fig. 1

15

Fig.9

Fig. 10

Fig. 11

Fig. 12

17

*Fig. 13*

*Fig. 14*

*Fig. 15*

FIG. 16

FIG. 17

FIG. 18

FIG. 18a

FIG. 19

FIG. 20

*Fig. 24* 362

*Fig. 25*

308
372    370
346    302
344    372
312
306A    374    364

*Fig. 23*